# EUROPEAN PATENT APPLICATION

(11) **EP 4 826 949 A1**
(43) Date of publication of application: **21.10.2026**
(21) Application number: 26167677.9
(22) Date of filing: 25.03.2026
(51) Int. Cl.: H02J 4/25, F02N 11/08, H02J 7/14, H02J 7/34, H02J 7/40, H02J 7/50, H02J 7/82, H02J 7/96, H02J 9/06

(54) **CONTROL DEVICE, MOVING OBJECT, CONTROL METHOD, PROGRAM, AND STORAGE MEDIUM FOR POWER SUPPLY SYSTEM**

(30) Priority: 27.03.2025 JP 2025053723
(71) Applicant: Honda Motor Co., Ltd., Toyko 105-8404 (JP)
(72) Inventor: OKAZAKI, Atsushi, Saitama 351-0193 (JP); MATSUMOTO, Takeshi, Saitama 351-0193 (JP); ASARI, Norihiro, Saitama 351-0193 (JP); SHUTO, Kenta, Saitama 351-0193 (JP); HAGA, Hisao, Saitama 351-0193 (JP); KON, Takashi, Saitama 351-0193 (JP); TEZUKA, Tomoaki, Saitama 351-0193 (JP)
(74) Representative: Weickmann & Weickmann PartmbB

(57) **Abstract**

A control device (84) is equipped with a control unit (92) that starts a power supply system (26) in a procedure according to a comparison result between an output voltage (VBAT1) of a first power storage device (52a) and an output voltage (VBAT2) of a second power storage device (52b), and if the output voltage of the first power storage device is less than or equal to that of the second power storage device, the control unit allows an current reverse flow in a first power supply circuit (38a), and in a state where the second power storage device is disconnected from a second power supply circuit (38b), executes precharging, using the charge supplied from the first power storage device, of a smoothing capacitor (44) that is provided respectively in each of an power generating device (30), a first load device (42a) and a second load device (42b).

## Description

### BACKGROUND OF THE INVENTION

### FIELD OF THE INVENTION

The present disclosure relates to a control device, a moving object, a control method, program, and a storage medium.

### DESCRIPTION OF THE RELATED ART

In JP 2023-147342 A, there is disclosed an electrical power supply system that supplies, via an electrical power supply circuit, an electrical power that is output from a main electrical power supply device equipped with an electrical power generator. In the electrical power supply system disclosed in JP 2023-147342 A, an auxiliary electrical power source device is connected to the electrical power supply circuit via a contactor unit that includes a precharge circuit.

### SUMMARY OF THE INVENTION

There is a long awaited need for a more satisfactory control device.

The present invention has the object of solving the aforementioned problem.

A first aspect of the present disclosure is characterized by a control device provided in an electrical power supply system, wherein the electrical power supply system comprises a first electrical power supply circuit configured to be capable of supplying a direct current electrical power that is output from an electrical power generating device to a first load device, a first electrical power storage device configured to be capable of being connected to the first electrical power supply circuit in parallel with the electrical power generating device, a second electrical power supply circuit configured to be capable of supplying a direct current electrical power that is output from the electrical power generating device to a second load device, and a second electrical power storage device configured to be capable of being connected to the second electrical power supply circuit in parallel with the electrical power generating device, wherein the control device comprises: a comparison unit configured to compare an output voltage of the first electrical power storage device with an output voltage of the second electrical power storage device; and a control unit configured to start the electrical power supply system in a procedure according to a result of the comparison in the comparison unit, in a first case which is a case in which it is determined by the comparison unit that the output voltage of the first electrical power storage device is less than or equal to the output voltage of the second electrical power storage device, the control unit sets a first reverse flow prevention device that is provided in the first electrical power supply circuit to a state in which reverse flowing of the electrical current in the first electrical power supply circuit is allowed, and further, in a state in which the second electrical power storage device is disconnected from the second electrical power supply circuit, and using the electrical charge supplied from the first electrical power storage device, executes precharging to charge a smoothing capacitor that is provided in each of the first electrical power generating device, the first load device, and the second load device; and in a second case which is a case in which it is determined by the comparison unit that the output voltage of the first electrical power storage device is greater than the output voltage of the second electrical power storage device, the control unit sets a second reverse flow prevention device that is provided in the second electrical power supply circuit to a state in which reverse flowing of the electrical current in the second electrical power supply circuit is allowed, and further, in a state in which the first electrical power storage device is disconnected from the first electrical power supply circuit, and using the electrical charge supplied from the second electrical power storage device, executes the precharging.

Another aspect of the present disclosure is characterized by a moving object comprising an electrical power supply system equipped with the aforementioned control device.

Another aspect of the present disclosure is characterized by a control method configured to control an electrical power supply system, wherein the electrical power supply system comprises a first electrical power supply circuit configured to be capable of supplying a direct current electrical power that is output from an electrical power generating device to a first load device, a first electrical power storage device configured to be capable of being connected to the first electrical power supply circuit in parallel with the electrical power generating device, a second electrical power supply circuit configured to be capable of supplying a direct current electrical power that is output from the electrical power generating device to a second load device, and a second electrical power storage device configured to be capable of being connected to the second electrical power supply circuit in parallel with the electrical power generating device, the control method comprising a comparison step of comparing an output voltage of the first electrical power storage device with an output voltage of the second electrical power storage device, a starting step of starting the electrical power supply system in a procedure according to a result of the comparison in the comparison step, in a first case which is a case in which it is determined in the comparison step that the output voltage of the first electrical power storage device is less than or equal to the output voltage of the second electrical power storage device, in the starting step, a first reverse flow prevention device that is provided in the first electrical power supply circuit is set to a state in which reverse flowing of the electrical current in the first electrical power supply circuit is allowed, and further, in a state in which the second electrical power storage device is disconnected from the second electrical power supply circuit, and using the electrical charge supplied from the first electrical power storage device, precharging to charge a smoothing capacitor that is provided in each of the first electrical power generating device, the first load device, and the second load device is executed, and in a second case which is a case in which it is determined in the comparison step that the output voltage of the first electrical power storage device is greater than the output voltage of the second electrical power storage device, in the starting step, a second reverse flow prevention device that is provided in the second electrical power supply circuit is set to a state in which reverse flowing of the electrical current in the second electrical power supply circuit is allowed, and further, in a state in which the first electrical power storage device is disconnected from the first electrical power supply circuit, and using the electrical charge supplied from the second electrical power storage device, the precharging is executed.

Yet another aspect of the present disclosure is characterized by a program in order to execute the aforementioned control method.

Yet another aspect of the present disclosure is characterized by a non-transitory storage medium in which the aforementioned program is stored.

According to the present disclosure, it is possible to provide a more satisfactory control device and the like.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic diagram of a moving object according to one embodiment;
FIG. 2 is a schematic diagram showing a configuration of an electrical power supply system according to the one embodiment;
FIG. 3 is a block diagram showing a configuration of a control device according to the one embodiment;
FIG. 4 is a time chart showing an example of operations of the electrical power supply system according to the one embodiment;
FIG. 5 is a time chart showing an example of operations of the electrical power supply system according to the one embodiment;
FIG. 6 is a flowchart showing an example of operations of the electrical power supply system according to the one embodiment; and
FIG. 7 is a time chart showing an example of operations of the electrical power supply system according to a comparative example.

### DETAILED DESCRIPTION OF THE INVENTION

When the electrical power supply system is started, precharging is carried out to supply an electrical charge to a smoothing capacitor provided in an electrical power generating device, a load device, or the like, via a precharging resistor in order to prevent an inrush current from flowing to the smoothing capacitor. In such an electrical power supply system, in the case that a plurality of electrical power storage devices with different voltages are simply connected, because the internal resistance of the electrical power storage devices is generally small, there are cases in which a large current (an inrush current) may flow between the electrical power storage devices. Therefore, a precharging resistor having a comparatively large rated electrical power is used. However, such a precharging resistor having a comparatively large rated electrical power possesses a comparatively large mass. The precharging resistor possessing a comparatively large mass increases the mass of the electrical power supply system, which in turn reduces the cruising range of the moving object. Further, in the case that the electrical power supply system is simply started, a long time period may be necessary. For example, when connecting a plurality of the electrical power storage devices whose voltages differ from each other, a method is required to make the voltages of the electrical power storage devices uniform via the precharging resistor. According to the present disclosure described below, together with enabling the weight of the electrical power supply system to be reduced, the starting of the electrical power supply system can be made faster.

### [Embodiment]

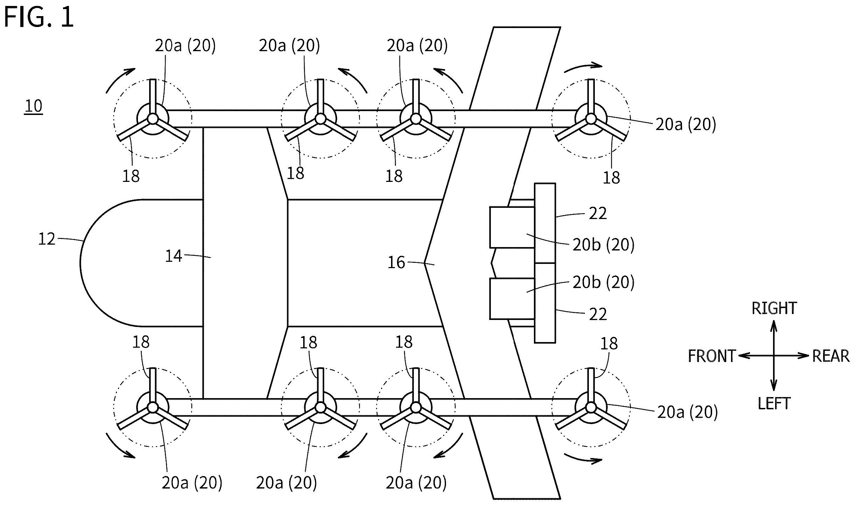

A description will be given with reference to the accompanying drawings concerning a control device, a moving object, a control method, a program, and a storage medium according to one embodiment. FIG. 1 is a schematic diagram of a moving object according to the present embodiment. A moving object 10 according to the present embodiment, for example, is an electric vertical takeoff and landing aircraft (eVTOL aircraft), although the moving object is not necessarily limited to this feature. The moving object 10 may be a vehicle, a ship, or the like. The moving object 10 includes a fuselage 12. A cockpit, a cabin, and the like are provided in the fuselage 12. A pilot sits in the cockpit, and the pilot controls the moving object 10. Passengers and others board and ride in the cabin. The moving object 10 may be automatically controlled. The program (a computer program, computer software) according to the present embodiment may also be referred to as a computer program product. The computer program product is not limited to being a computer program that is recorded on a recording medium, but may also include a computer program that is transmitted, distributed, or downloaded via the Internet or the like.

The moving object 10 includes a front wing 14 and a rear wing 16. In the case that the moving object 10 moves frontward, a lift is generated respectively on each of the front wing 14 and the rear wing 16.

The moving object 10 is equipped with eight VTOL rotors 18, and two cruise rotors 22. One electric motor (one VTOL electric motor) 20a can be provided with respect to one of the VTOL rotors 18. The electric motor 20a, for example, is a single three phase motor. One electric motor (a cruise electric motor) 20b may be provided with respect to one of the cruise rotors 22. The electric motor 20b, for example, is a dual three phase motor. When the individual electric motors are described while distinguishing therebetween, the reference numerals 20a and 20b will be used, and when the individual electric motors are described without distinguishing therebetween, the reference numeral 20 will be used.

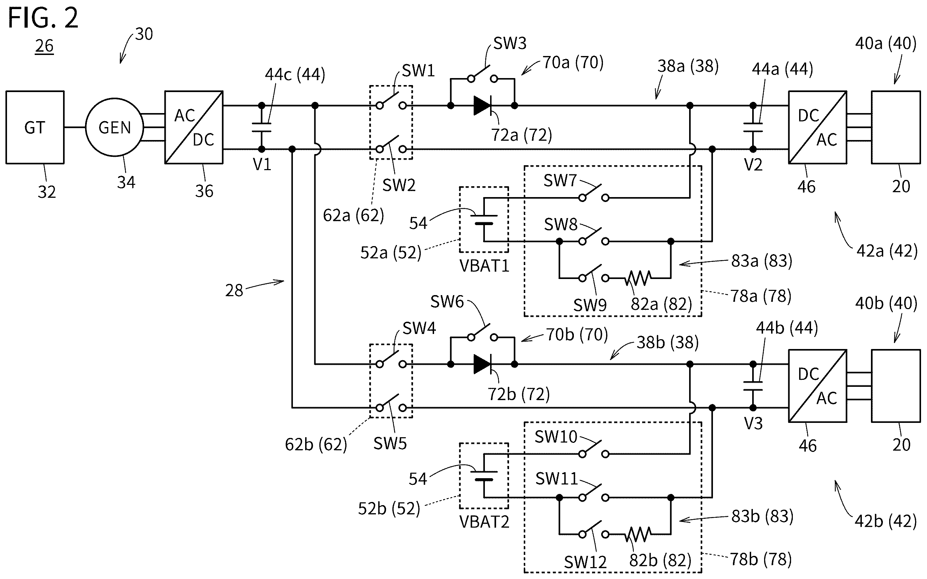

FIG. 2 is a schematic diagram showing a configuration of an electrical power supply system according to the present embodiment. In an electrical power supply system 26, although a plurality of electrical power supply sub-systems 28 may be provided, one of the electrical power supply sub-systems 28 from among a plurality of the electrical power supply sub-systems 28 is shown in the figure. The electrical power supply system 26 is equipped with an electrical power generating device 30 that serves as a main electrical power source. In the electrical power supply system 26, although a plurality of electrical power generating devices 30 may be provided, one electrical power generating device 30 from among a plurality of the electrical power generating devices 30 is shown in the figure.

The electrical power generating device 30 includes an engine (a gas turbine engine) 32, an electrical power generator (a starter generator) 34, and a power drive unit (hereinafter, referred to as a PDU) 36. An output shaft of the engine 32 is connected to a rotating shaft of the electrical power generator 34. The engine 32 serves to drive the electrical power generator 34. In accordance with this feature, generation of electrical power is carried out by the electrical power generator 34. The PDU 36 converts and outputs an AC electrical power generated by the electrical power generator 34 into a DC electrical power. In the case that the engine 32 is started, the PDU 36 converts the DC electrical power that was input to the PDU 36 into a three phase AC electrical power, and outputs the AC electrical power to the electrical power generator 34. Further, the electrical power generator 34 receives the AC electrical power and operates as a starter motor, thereby causing the engine 32 to be started. Moreover, although the electrical power generator 34 is not limited to being a starter generator, it may be a generator that carries out only generation of electrical power, and in this case, a starter motor that causes the gas turbine engine to be started is provided separately from the generator. A smoothing capacitor 44c may be provided in the electrical power generating device 30. The smoothing capacitor 44c may be provided inside the PDU 36 that is provided in the electrical power generating device 30, although the smoothing capacitor is not necessarily limited to this feature.

The electrical power generating device 30 may include various elements, such as various sensors such as voltage sensors, electrical current sensors or the like, fuses, relays, breakers, diodes, transistors, resistors, coils, capacitors, and the like.

The electrical power supply system 26 may be equipped with a plurality of electrical power supply circuits 38. In the plurality of electrical power supply circuits 38, there may be included an electrical power supply circuit (a first electrical power supply circuit) 38a, and an electrical power supply circuit (a second electrical power supply circuit) 38b. When the individual electrical power supply circuits are described while distinguishing therebetween, the reference numerals 38a and 38b will be used, and when the individual electrical power supply circuits are described without distinguishing therebetween, the reference numeral 38 will be used.

The electrical power supply system 26 may be equipped with a plurality of load modules 40. In the plurality of load modules 40, there may be included a load module 40a, and a load module 40b. When the individual load modules are described while distinguishing therebetween, the reference numerals 40a and 40b will be used, and when the individual load modules are described without distinguishing therebetween, the reference numeral 40 will be used.

The electrical power supply circuit 38a supplies a DC electrical power supplied from the electrical power generating device 30 to the load device 40a. The electrical power supply circuit 38b supplies a DC electrical power supplied from the electrical power generating device 30 to the load device 40b.

A plurality of load devices 42 may be provided in the load modules 40. In the plurality of load devices 42, there may be included a load device (a first load device) 42a, and a load device (a second load device) 42b. When the individual load devices are described while distinguishing therebetween, the reference numerals 42a and 42b will be used, and when the individual load devices are described without distinguishing therebetween, the reference numeral 42 will be used. In the load module 40a, although a plurality of load devices 42a may be provided, one load device 42a from among a plurality of load devices 42a is shown in the figure. In the load module 40b, although a plurality of load devices 42b may be provided, one load device 42b from among a plurality of load devices 42b is shown in the figure.

The load device 42a and the load device 42b each include, for example, a drive device 46 and an electric motor 20. The drive device 46 is an inverter having a non-illustrated switching element. By controlling the switching element, the drive device 46 converts the DC electrical power that is input to the drive device 46 into a three phase AC electrical power and outputs the AC electrical power to the electric motor 20. A smoothing capacitor 44a may be provided in the load device 42a. A smoothing capacitor 44b may be provided in the load device 42b. When the individual smoothing capacitors are described while distinguishing therebetween, the reference numerals 44a and 44b will be used, and when the individual smoothing capacitors are described without distinguishing therebetween, the reference numeral 44 will be used. The smoothing capacitors 44a and 44b may be provided in the drive devices 46 that are respectively provided in the load devices 42a and 42b, although the smoothing capacitors are not necessarily limited to this feature.

Each of the respective load devices 42 may include various elements, such as various sensors such as voltage sensors, electrical current sensors or the like, fuses, relays, breakers, diodes, transistors, resistors, coils, capacitors, and the like.

The electrical power supply system 26 includes a plurality of electrical power storage devices 52. In the plurality of electrical power storage devices 52, there may be included an electrical power storage device (a first electrical power storage device) 52a, and an electrical power storage device (a second electrical power storage device) 52b. When the individual electrical power storage devices are described while distinguishing therebetween, the reference numerals 52a and 52b will be used, and when the individual electrical power storage devices are described without distinguishing therebetween, the reference numeral 52 will be used. The electrical power storage devices 52 can be connected via a disconnection device 78 to each of the electrical power supply circuits 38. The electrical power storage devices 52 can be connected in parallel with the electrical power generating device 30. Each of the electrical power storage devices 52 includes a battery 54. The battery 54, for example, is a lithium ion battery. The rated output voltage of the electrical power storage devices 52, for example, is several hundred volts, although the electrical power storage devices are not necessarily limited to this feature.

Each of the respective electrical power storage devices 52 may include various elements, such as various sensors such as voltage sensors, electrical current sensors or the like, fuses, relays, breakers, diodes, transistors, resistors, coils, capacitors, and the like.

The electrical power supply system 26 includes a plurality of disconnection devices 62. The plurality of disconnection devices 62 may include a disconnection device 62a and a disconnection device 62b. When the individual disconnection devices are described while distinguishing therebetween, the reference numerals 62a and 62b will be used, and when the individual disconnection devices are described without distinguishing therebetween, the reference numeral 62 will be used. The disconnection device 62a includes two switches (contactors) SW1 and SW2. The switch SW1 is disposed in a wiring of a positive electrode, and the switch SW2 is disposed in a wiring of a negative electrode. The disconnection device 62b includes two switches (contactors) SW4 and SW5. The switch SW4 is disposed in a wiring of a positive electrode, and the switch SW5 is disposed in a wiring of a negative electrode.

The disconnection device 62a is capable of disconnecting the electrical power generating device 30 from the electrical power supply circuit 38a. The disconnection device 62b is capable of disconnecting the electrical power generating device 30 from the electrical power supply circuit 38b.

The electrical power supply system 26 includes a plurality of reverse flow prevention devices 70. In the plurality of reverse flow prevention devices 70, there may be provided a reverse flow prevention device (a first reverse flow prevention device) 70a, and a reverse flow prevention device (a second reverse flow prevention device) 70b. When the individual reverse flow prevention devices are described while distinguishing therebetween, the reference numerals 70a and 70b will be used, and when the individual reverse flow prevention devices are described without distinguishing therebetween, the reference numeral 70 will be used. The reverse flow prevention device 70a is disposed in a positive electrode of the electrical power supply circuit 38a. The reverse flow prevention device 70b is disposed in a positive electrode of the electrical power supply circuit 38b. Moreover, each of the reverse flow prevention devices 70 may be disposed on a negative electrode of each of the electrical power supply circuits 38.

The reverse flow prevention device 70a includes a reverse flow prevention element 72a. The reverse flow prevention device 70b includes a reverse flow prevention element 72b. When the individual reverse flow prevention elements are described while distinguishing therebetween, the reference numerals 72a and 72b will be used, and when the individual reverse flow prevention elements are described without distinguishing therebetween, the reference numeral 72 will be used. The reverse flow prevention elements 72, for example, are diodes. The reverse flow prevention element 72a prevents reverse flowing of the electrical current in the electrical power supply circuit 38a. The reverse flow prevention element 72b prevents reverse flowing of the electrical current in the electrical power supply circuit 38b.

The reverse flow prevention device 70a includes a switch (a reverse flow allowing element) SW3. The reverse flow prevention device 70b includes a switch (a reverse flow allowing element) SW6. The switches SW3 and SW6 may be constituted, for example, by an insulated gate bipolar transistor (hereinafter referred to as an IGBT), although the switches are not necessarily limited to this feature. The switches SW3 and SW6 may be constituted by a contactor, a relay, or the like. In the case that the switches SW3 and SW6 are in an OFF state, the reverse flow prevention elements 72a and 72b prevent a reverse electrical current from flowing respectively in the electrical power supply circuits 38a and 38b. More specifically, by setting the switch SW3 in an OFF state, the reverse flow prevention device 70a is set to a state in which a reverse flow of the electrical current in the electrical power supply circuit 38a is not permitted. Further, by setting the switch SW6 in an OFF state, the reverse flow prevention device 70b is set to a state in which a reverse flow of the electrical current in the electrical power supply circuit 38b is not permitted. When the switch SW3 is in the ON state, because an electrical current flows through the switch SW3 in a bypassing manner to the reverse flow prevention element 72a, a reverse flow of the electrical current in the electrical power supply circuit 38a is permitted. More specifically, by setting the switch SW3 in an ON state, the reverse flow prevention device 70a is set to a state in which a reverse flow of the electrical current in the electrical power supply circuit 38a is permitted. In the case that the switch SW6 is in the ON state, because an electrical current flows through the switch SW6 in a bypassing manner to the reverse flow prevention element 72b, a reverse flow of the electrical current in the electrical power supply circuit 38b is permitted. More specifically, by setting the switch SW6 in an ON state, the reverse flow prevention device 70b is set to a state in which a reverse flow of the electrical current in the electrical power supply circuit 38b is permitted.

The electrical power supply system 26 includes a plurality of disconnection devices 78. The plurality of disconnection devices 78 may include a disconnection device 78a and a disconnection device 78b. When the individual disconnection devices are described while distinguishing therebetween, the reference numerals 78a and 78b will be used, and when the individual disconnection devices are described without distinguishing therebetween, the reference numeral 78 will be used.

The disconnection device 78a includes three switches (contactors) SW7, SW8, and SW9, and one precharging resistor 82a. The switch SW7 is disposed in a wiring of a positive electrode. The switch SW8 is disposed in a wiring of a negative electrode. The switch SW9 is disposed in a precharging circuit 83a that bypasses the switch SW8 that is provided in the negative electrode. The precharging resistor 82a is disposed in series with the switch SW9 in the precharging circuit 83a.

The disconnection device 78b includes three switches (contactors) SW10, SW11, and SW12, and one precharging resistor 82b. The switch SW10 is disposed in a wiring of a positive electrode. The switch SW11 is disposed in a wiring of a negative electrode. The switch SW12 is disposed in a precharging circuit 83b that bypasses the switch SW11 that is provided in the negative electrode. The precharging resistor 82b is disposed in series with the switch SW12 in the precharging circuit 83b. When the individual precharging circuits are described without distinguishing therebetween, the reference numeral 83 will be used, and when the individual precharging circuits are described while distinguishing therebetween, the reference numerals 83a and 83b will be used.

The disconnection device 78a is capable of disconnecting the electrical power storage device 52a from the electrical power supply circuit 38a. The disconnection device 78b is capable of disconnecting the electrical power storage device 52b from the electrical power supply circuit 38b.

In the case that the smoothing capacitor 44a is precharged with the DC electrical power that is output from the electrical power storage device 52a, the disconnection device 78a allows the DC electrical power to be supplied from the electrical power storage device 52a to the electrical power supply circuit 38a, via the precharging circuit 83a. In the case that the switches SW1, SW2, and SW3 are in an ON state, not only the smoothing capacitor 44a, but also the smoothing capacitor 44c is capable of being precharged. In the case that the smoothing capacitor 44b is precharged with the DC electrical power that is output from the electrical power storage device 52b, the disconnection device 78b allows the DC electrical power to be supplied from the electrical power storage device 52b to the electrical power supply circuit 38b, via the precharging circuit 83b. In the case that the switches SW4, SW5, and SW6 are in an ON state, not only the smoothing capacitor 44b, but also the smoothing capacitor 44c is capable of being precharged.

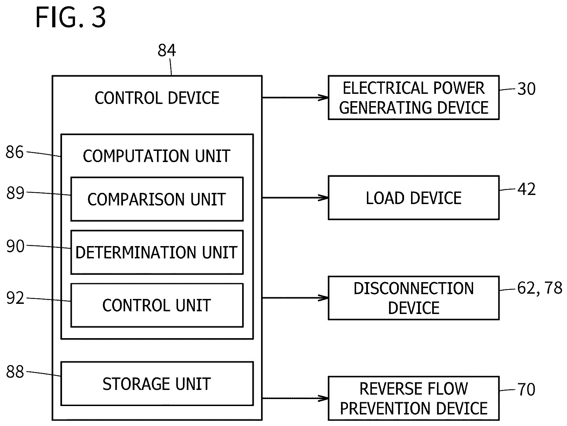

The electrical power supply system 26 is equipped with a control device 84. FIG. 3 is a block diagram showing a configuration of the control device according to the present embodiment.

As shown in FIG. 3, the control device 84 includes a computation unit 86 and a storage unit 88. The computation unit 86 includes a processor such as a CPU (Central Processing Unit) or a GPU (Graphics Processing Unit) or the like. The computation unit 86 includes a comparison unit 89, a determination unit 90, and a control unit 92. The comparison unit 89, the determination unit 90, and the control unit 92 are realized by the computation unit 86 executing a program that is stored in the storage unit 88. At least a portion of the comparison unit 89, the determination unit 90, and the control unit 92 may be realized by an integrated circuit such as an ASIC (Application Specific Integrated Circuit) or an FPGA (Field Programmable Gate Array) or the like. At least one of the comparison unit 89, the determination unit 90, and the control unit 92 may be realized by an electronic circuit including a discrete device.

The storage unit 88 is a computer readable non-transitory tangible storage medium. The storage unit 88 is constituted by a non-illustrated volatile memory, and a non-illustrated non-volatile memory. The volatile memory, for example, is a RAM (Random Access Memory) or the like. The non-volatile memory, for example, is a ROM (Read Only Memory), a flash memory, or the like. Data and the like are stored, for example, in the volatile memory. A program, a table, a map, and the like are stored, for example, in the non-volatile memory. At least a portion of the storage unit 88 may be provided in the aforementioned processor, the integrated circuit, or the like. At least a portion of the storage unit 88 may be installed in a device that is connected by a network to the moving object 10.

As noted previously, the control unit 92 may be provided in the control device 84. The control unit 92 is responsible for the overall control of the control device 84. The control unit 92 is capable of controlling each of the electrical power generation device 30, the load device 42, the disconnection devices 62 and 78, and the reverse flow prevention device 70. Moreover, a distributed control may be carried out by the control unit 92 that is provided in each of the plurality of control devices 84.

The comparison unit 89 is capable of comparing an output voltage VBAT1 of the electrical power storage device 52a, and an output voltage VBAT2 of the electrical power storage device 52b.

The control unit 92, in accordance with a procedure according to the result of the comparison by the comparison unit 89, is capable of precharging the smoothing capacitors 44 that are provided in each of the electrical power generating device 30 and the load device 42a and the load device 42b.

In the case that the output voltage VBAT1 of the electrical power storage device 52a is less than or equal to the output voltage VBAT2 of the electrical power storage device 52b, the control unit 92 allows the reverse flow of the electrical current in the electrical power supply circuit 38a by means of the switch SW3, and further, in a state in which the electrical power storage device 52b is disconnected from the electrical power supply circuit 38b, and using the electrical charge supplied from the electrical power storage device 52a, executes precharging of the smoothing capacitors 44. As noted previously, a control device 84 may be provided in the determination unit 90. The determination unit 90 is capable of determining whether or not the difference between the voltages V1 to V3 across both ends of the smoothing capacitors 44 and the output voltage VBAT1 of the electrical power storage device 52a is less than or equal to a predetermined difference threshold value. The voltages V1 to V3 across both ends of the smoothing capacitors 44 can be grasped based on the measurement result obtained by a non-illustrated voltage sensor that serves to measure the voltage at the cathode of the reverse flow prevention element 72a. In this manner, precharging of the smoothing capacitors 44 is executed. After the precharging has been executed, by the electrical power being supplied via the precharging resistor 82b from the electrical power storage device 52b to the electrical power supply circuit 38b, additional charging of the smoothing capacitor 44b that is provided in the load device 42b is carried out. After the additional charging has been carried out, the electrical power storage device 52b is connected to the electrical power supply circuit 38b. The control unit 92, using the DC electrical power that is supplied from the electrical power storage device 52a, starts the engine 32 that is connected to the electrical power generator 34 that is provided in the electrical power generating device 30.

In the case that the output voltage VBAT1 of the electrical power storage device 52a is greater than the output voltage VBAT2 of the electrical power storage device 52b, the control unit 92 allows the reverse flow of the electrical current in the electrical power supply circuit 38b by means of the switch SW6, and further, in a state in which the electrical power storage device 52a is disconnected from the electrical power supply circuit 38a, and using the electrical charge supplied from the electrical power storage device 52b, executes precharging of the smoothing capacitors 44. The determination unit 90 is capable of determining whether or not the difference between the voltages V1 to V3 across both ends of the smoothing capacitors 44 and the output voltage VBAT2 of the electrical power storage device 52b is less than or equal to the predetermined difference threshold value. The voltages V1 to V3 across both ends of the smoothing capacitors 44 can be grasped based on the measurement result obtained by a non-illustrated voltage sensor that serves to measure the voltage at the cathode of the reverse flow prevention element 72b. In this manner, precharging of the smoothing capacitors 44 is executed. After the precharging has been executed, by the electrical power being supplied via the precharging resistor 82a from the electrical power storage device 52a to the electrical power supply circuit 38a, additional charging of the smoothing capacitor 44a that is provided in the load device 42a is carried out. After the additional charging has been carried out, the electrical power storage device 52a is connected to the electrical power supply circuit 38a. The control unit 92, using the DC electrical power that is supplied from the electrical power storage device 52b, starts the engine 32 that is connected to the electrical power generator 34 that is provided in the electrical power generating device 30.

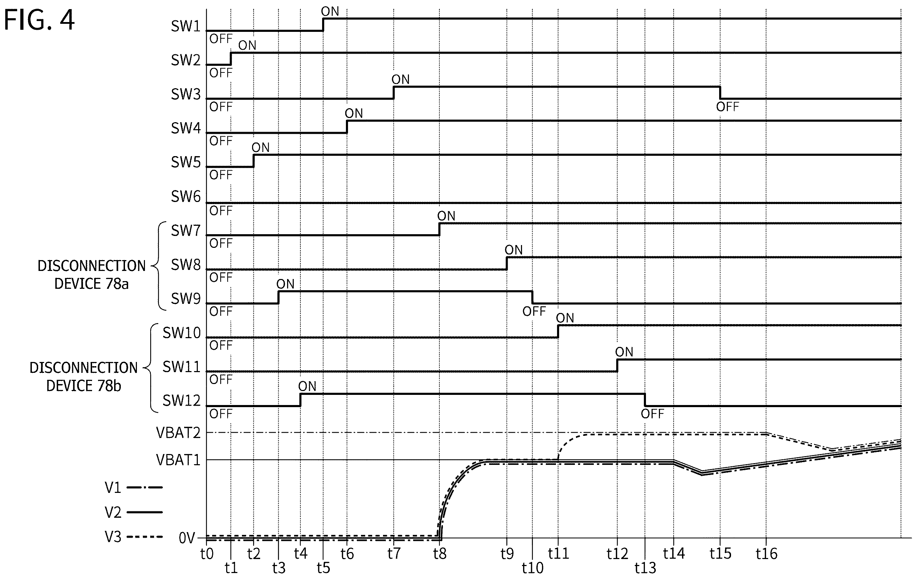

A description will be given with reference to FIG. 4 concerning an example of operations of the electrical power supply system according to the present embodiment. FIG. 4 is a time chart showing an example of operations of the electrical power supply system according to the present embodiment. The time chart shown in FIG. 4 shows operations of the electrical power supply system 26 in the case that the output voltage VBAT1 of the electrical power storage device 52a is less than or equal to the output voltage VBAT2 of the electrical power storage device 52b. The operations when the electrical power supply system 26 is caused to be started are shown in FIG. 4.

At time t0, the switches SW1 to SW12 are set to the OFF state.

At time t1, the control unit 92 sets the switch SW2 that is provided in the disconnection device 62a to the ON state.

At time t2, the control unit 92 sets the switch SW5 that is provided in the disconnection device 62b to the ON state.

At time t3, the control unit 92 sets the switch SW9 that is provided in the disconnection device 78a to the ON state. In accordance therewith, the precharging circuit 83a is constituted.

At time t4, the control unit 92 sets the switch SW12 that is provided in the disconnection device 78b to the ON state. In accordance therewith, the precharging circuit 83b is constituted.

At time t5, the control unit 92 sets the switch SW1 that is provided in the disconnection device 62a to the ON state. In accordance therewith, a state in which the electrical power supply circuit 38a is connected to the electrical power generating device 30 is brought about.

At time t6, the control unit 92 sets the switch SW4 that is provided in the disconnection device 62b to the ON state. In accordance therewith, a state in which the electrical power supply circuit 38b is connected to the electrical power generating device 30 is brought about.

At time t7, the control unit 92 sets the switch (the reverse flow prevention element) SW3 that is provided in the reverse flow prevention device 70a to the ON state. In accordance therewith, a state in which a reverse flow of the electrical current is permitted in the electrical power supply circuit 38a is brought about.

At time t8, the control unit 92 sets the switch SW7 that is provided in the disconnection device 78a to the ON state. In accordance therewith, the DC electrical power that is output from the electrical power storage device 52a begins to be supplied, via the precharging resistor 82a, to the electrical power supply circuit 38a. As the precharging progresses, the difference between the voltages V1 to V3 across both ends of the smoothing capacitors 44 and the output voltage VBAT1 of the electrical power storage device 52a becomes less than or equal to the predetermined difference threshold value.

At time t9 after the difference between the voltages V1 to V3 across both ends of the smoothing capacitors 44 and the output voltage VBAT1 of the electrical power storage device 52a has become less than or equal to the predetermined difference threshold value, the control unit 92 sets the switch SW8 that is provided in the disconnection device 78a to the ON state. In accordance therewith, the electrical power storage device 52a, without passing via the precharging circuit 83a, is connected to the electrical power supply circuit 38a.

At time t10, the control unit 92 sets the switch SW9 that is provided in the disconnection device 78a to the OFF state.

At time t11, the control unit 92 sets the switch SW10 that is provided in the disconnection device 78b to the ON state. In accordance therewith, the DC electrical power that is output from the electrical power storage device 52b begins to be supplied, via the precharging resistor 82b, to the electrical power supply circuit 38b. Since the output voltage VBAT2 of the electrical power storage device 52b is greater than the voltage V3 across both ends of the smoothing capacitor 44b, additional charging of the smoothing capacitor 44b proceeds. As the additional charging of the smoothing capacitor 44b progresses, the difference between the voltage V3 across both ends of the smoothing capacitor 44b and the output voltage VBAT2 of the electrical power storage device 52b becomes less than or equal to the predetermined difference threshold value.

At time t12 after the difference between the voltage V3 across both ends of the smoothing capacitor 44b and the output voltage VBAT2 of the electrical power storage device 52b has become less than or equal to the predetermined difference threshold value, the control unit 92 sets the switch SW11 that is provided in the disconnection device 78b to the ON state. In accordance therewith, the electrical power storage device 52b, without passing via the precharging circuit 83b, is connected to the electrical power supply circuit 38b.

At time t13, the control unit 92 sets the switch SW12 that is provided in the disconnection device 78b to the OFF state.

At time t14, the control unit 92, using the DC electrical power that is supplied from the electrical power storage device 52a, starts the engine 32 that is connected to the electrical power generator 34 that is provided in the electrical power generating device 30.

After the electrical power generating device 30 has started supplying the electrical power, at time t15, the control unit 92 sets the switch (the reverse flow allowing element) SW3 that is provided in the reverse flow prevention device 70a to the OFF state. In accordance therewith, a state in which a reverse flow of the electrical current is not permitted in the electrical power supply circuit 38a is brought about.

At time t16, the control unit 92 places the load devices 42 in the ON state. In this manner, the electrical power supply system 26 is started.

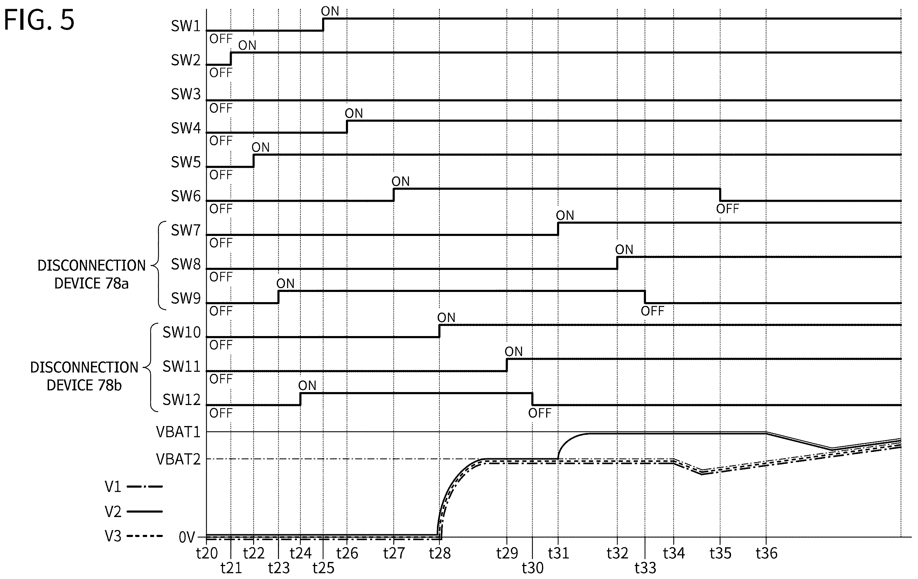

A description will be given with reference to FIG. 5 concerning an example of operations of the electrical power supply system according to the present embodiment. FIG. 5 is a time chart showing an example of operations of the electrical power supply system according to the present embodiment. The time chart shown in FIG. 5 shows operations of the electrical power supply system 26 in the case that the output voltage VBAT1 of the electrical power storage device 52a is greater than the output voltage VBAT2 of the electrical power storage device 52b.

At time t20, the switches SW1 to SW12 are set to the OFF state.

At times t21, t22, t23, t24, t25, and t26, the control unit 92, similar to the control at times t1, t2, t3, t4, t5, and t6 described above with reference to FIG. 4, sequentially sets the switches SW2, SW5, SW9, SW12, SW1, and SW4 to the ON state.

At time t27, the control unit 92 sets the switch (the reverse flow prevention element) SW6 that is provided in the reverse flow prevention device 70b to the ON state. In accordance therewith, a state in which a reverse flow of the electrical current is permitted in the electrical power supply circuit 38b is brought about.

At time t28, the control unit 92 sets the switch SW10 that is provided in the disconnection device 78b to the ON state. In accordance therewith, the DC electrical power that is output from the electrical power storage device 52b begins to be supplied, via the precharging resistor 82b, to the electrical power supply circuit 38b. As the precharging progresses, the difference between the voltages V1 to V3 across both ends of the smoothing capacitors 44 and the output voltage VBAT2 of the electrical power storage device 52b becomes less than or equal to the predetermined difference threshold value.

At time t29 after the difference between the voltages V1 to V3 across both ends of the smoothing capacitors 44 and the output voltage VBAT2 of the electrical power storage device 52b has become less than or equal to the predetermined difference threshold value, the control unit 92 sets the switch SW11 that is provided in the disconnection device 78b to the ON state. In accordance therewith, the electrical power storage device 52b, without passing via the precharging circuit 83b, is connected to the electrical power supply circuit 38b.

At time t30, the control unit 92 sets the switch SW12 that is provided in the disconnection device 78b to the OFF state.

At time t31, the control unit 92 sets the switch SW7 that is provided in the disconnection device 78a to the ON state. In accordance therewith, the DC electrical power that is output from the electrical power storage device 52a begins to be supplied, via the precharging resistor 82a, to the electrical power supply circuit 38a. Since the output voltage VBAT1 of the electrical power storage device 52a is greater than the voltage V2 across both ends of the smoothing capacitor 44a, additional charging of the smoothing capacitor 44a proceeds. As the additional charging of the smoothing capacitor 44a progresses, the difference between the voltage V2 across both ends of the smoothing capacitor 44a and the output voltage VBAT1 of the electrical power storage device 52a becomes less than or equal to the predetermined difference threshold value.

At time t32 after the difference between the voltage V2 across both ends of the smoothing capacitor 44a and the output voltage VBAT1 of the electrical power storage device 52a has become less than or equal to the predetermined difference threshold value, the control unit 92 sets the switch SW8 that is provided in the disconnection device 78a to the ON state. In accordance therewith, the electrical power storage device 52a, without passing via the precharging circuit 83a, is connected to the electrical power supply circuit 38a.

At time t33, the control unit 92 sets the switch SW9 that is provided in the disconnection device 78a to the OFF state.

At time t34, the control unit 92, using the DC electrical power that is supplied from the electrical power storage device 52b, starts the engine 32 that is connected to the electrical power generator 34 that is provided in the electrical power generating device 30.

After the electrical power generating device 30 has started supplying the electrical power, at time t35, the control unit 92 sets the switch (the reverse flow allowing element) SW6 that is provided in the reverse flow prevention device 70b to the OFF state. In accordance therewith, a state in which a reverse flow of the electrical current is not permitted in the electrical power supply circuit 38b is brought about.

At time t36, the control unit 92 places the load devices 42 in the ON state. In this manner, the electrical power supply system 26 is started.

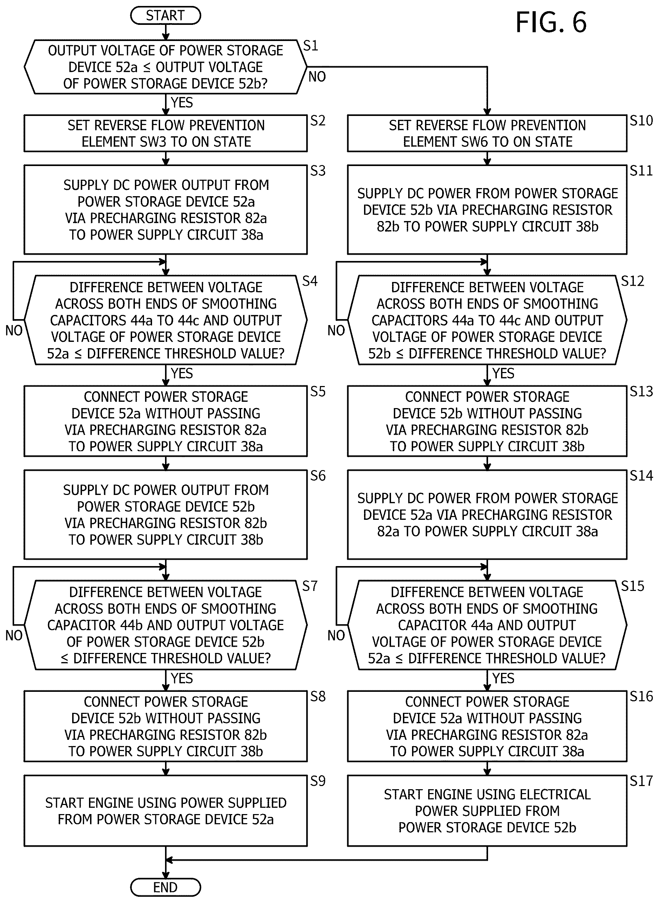

FIG. 6 is a flowchart showing an example of operations of the electrical power supply system according to the present embodiment. Moreover, steps S2 to S9 shown in FIG. 6 correspond to the operations that were described above with reference to FIG. 4, and steps S10 to S17 shown in FIG. 6 correspond to the operations that were described above with reference to FIG. 5. Prior to the initiation of the electrical power supply system 26 being started, the switches SW1 to SW12 provided in the electrical power supply system 26 are set to the OFF state.

In step S1, the comparison unit 89 compares the output voltage VBAT1 of the electrical power storage device 52a and the output voltage VBAT2 of the electrical power storage device 52b. Thereafter, the switch SW2, the switch SW5, the switch SW9, the switch SW12, the switch SW1, and the switch SW4 are sequentially set to the ON state. In the case that the output voltage VBAT1 of the electrical power storage device 52a is less than or equal to the output voltage VBAT2 of the electrical power storage device 52b (YES in step S1), the process transitions to step S2. In the case that the output voltage VBAT1 of the electrical power storage device 52a is greater than the output voltage VBAT2 of the electrical power storage device 52b (NO in step S1), the process transitions to step S10.

In step S2, the control unit 92 sets the switch (the reverse flow allowing element) SW3 that is provided in the reverse flow prevention device 70a to the ON state. In accordance therewith, a state in which a reverse flow of the electrical current is permitted by the switch SW3 in the electrical power supply circuit 38a is brought about. Thereafter, the process transitions to step S3.

In step S3, the control unit 92 supplies the DC electrical power that is output from the electrical power storage device 52a, via the precharging resistor 82a, to the electrical power supply circuit 38a. Specifically, the control unit 92, by the switch SW7 being set in the ON state, supplies the DC electrical power that is output from the electrical power storage device 52a, via the precharging resistor 82a, to the electrical power supply circuit 38a. Thereafter, the process transitions to step S4.

In step S4, the determination unit 90 determines whether or not the difference between the voltages V1 to V3 across both ends of the smoothing capacitors 44a to 44c and the output voltage VBAT1 of the electrical power storage device 52a is less than or equal to the predetermined difference threshold value. The voltages V1 to V3 across both ends of the smoothing capacitors 44a to 44c can be grasped based on the measurement result obtained by a non-illustrated voltage sensor that serves to measure the voltage at the cathode of the reverse flow prevention element 72a. In the case that the difference between the voltages V1 to V3 across both ends of the smoothing capacitors 44a to 44c and the output voltage VBAT1 of the electrical power storage device 52a is greater than the predetermined difference threshold value (NO in step S4), step S4 is repeated. In the case that the difference between the voltages V1 to V3 across both ends of the smoothing capacitors 44a to 44c and the output voltage VBAT1 of the electrical power storage device 52a is less than or equal to the predetermined difference threshold value (YES in step S4), the process transitions to step S5.

In step S5, the control unit 92, without passing via the precharging resistor 82a, connects the electrical power storage device 52a to the electrical power supply circuit 38a. Specifically, the control unit 92, by placing the switch SW8 that is provided in the disconnection device 78a in the ON state, and without passing via the precharging resistor 82a, serves to connect the electrical power storage device 52a to the electrical power supply circuit 38a. Thereafter, the switch SW9 that is provided in the disconnection device 78a is set to the OFF state. Thereafter, the process transitions to step S6.

In step S6, the control unit 92 supplies the DC electrical power that is output from the electrical power storage device 52b, via the precharging resistor 82b, to the electrical power supply circuit 38b. Specifically, the control unit 92, by the switch SW10 being set in the ON state, supplies the DC electrical power that is output from the electrical power storage device 52b, via the precharging resistor 82b, to the electrical power supply circuit 38b. Thereafter, the process transitions to step S7.

In step S7, the determination unit 90 determines whether or not the difference between the voltage V3 across both ends of the smoothing capacitor 44b and the output voltage VBAT2 of the electrical power storage device 52b is less than or equal to the predetermined difference threshold value. The voltage V3 across both ends of the smoothing capacitor 44b can be grasped based on the measurement result obtained by a non-illustrated voltage sensor that serves to measure the voltage at the cathode of the reverse flow prevention element 72b. In the case that the difference between the voltage V3 across both ends of the smoothing capacitors 44b and the output voltage VBAT2 of the electrical power storage device 52b is greater than the predetermined difference threshold value (NO in step S7), step S7 is repeated. In the case that the difference between the voltage V3 across both ends of the smoothing capacitors 44b and the output voltage VBAT2 of the electrical power storage device 52b is less than or equal to the predetermined difference threshold value (YES in step S7), the process transitions to step S8.

In step S8, the control unit 92, without passing via the precharging resistor 82b, connects the electrical power storage device 52b to the electrical power supply circuit 38b. Specifically, the control unit 92, by placing the switch SW11 that is provided in the disconnection device 78b in the ON state, and without passing via the precharging resistor 82b, serves to connect the electrical power storage device 52b to the electrical power supply circuit 38b. Thereafter, the switch SW12 that is provided in the disconnection device 78b is set to the OFF state. Thereafter, the process transitions to step S9.

In step S9, the control unit 92, using the DC electrical power that is supplied from the electrical power storage device 52a, starts the engine 32 that is connected to the electrical power generator 34 that is provided in the electrical power generating device 30.

As noted previously, in the case that the output voltage VBAT1 of the electrical power storage device 52a is greater than the output voltage VBAT2 of the electrical power storage device 52b (NO in step S1), the process transitions to step S10.

In step S10, the control unit 92 sets the switch (the reverse flow prevention element) SW6 that is provided in the reverse flow prevention device 70b to the ON state. In accordance therewith, a state in which a reverse flow of the electrical current is permitted by the switch SW6 in the electrical power supply circuit 38b is brought about. Thereafter, the process transitions to step S11.

In step S11, the control unit 92 supplies the DC electrical power that is output from the electrical power storage device 52b, via the precharging resistor 82b, to the electrical power supply circuit 38b. Specifically, the control unit 92, by the switch SW10 being set in the ON state, supplies the DC electrical power that is output from the electrical power storage device 52b, via the precharging resistor 82b, to the electrical power supply circuit 38b. Thereafter, the process transitions to step S12.

In step S12, the determination unit 90 determines whether or not the difference between the voltages V1 to V3 across both ends of the smoothing capacitors 44a to 44c and the output voltage VBAT2 of the electrical power storage device 52b is less than or equal to the predetermined difference threshold value. The voltages V1 to V3 across both ends of the smoothing capacitors 44a to 44c can be grasped based on the measurement result obtained by a non-illustrated voltage sensor that serves to measure the voltage at the cathode of the reverse flow prevention element 72b. In the case that the difference between the voltages V1 to V3 across both ends of the smoothing capacitors 44a to 44c and the output voltage VBAT2 of the electrical power storage device 52b is greater than the predetermined difference threshold value (NO in step S12), step S12 is repeated. In the case that the difference between the voltages V1 to V3 across both ends of the smoothing capacitors 44a to 44c and the output voltage VBAT2 of the electrical power storage device 52b is less than or equal to the predetermined difference threshold value (YES in step S12), the process transitions to step S13.

In step S13, the control unit 92, without passing via the precharging resistor 82b, connects the electrical power storage device 52b to the electrical power supply circuit 38b. Specifically, the control unit 92, by placing the switch SW11 that is provided in the disconnection device 78b in the ON state, and without passing via the precharging resistor 82b, serves to connect the electrical power storage device 52b to the electrical power supply circuit 38b. Thereafter, the switch SW12 that is provided in the disconnection device 78a is set to the OFF state. Thereafter, the process transitions to step S14.

In step S14, the control unit 92 supplies the DC electrical power that is output from the electrical power storage device 52a, via the precharging resistor 82a, to the electrical power supply circuit 38a. Specifically, the control unit 92, by the switch SW7 being set in the ON state, supplies the DC electrical power that is output from the electrical power storage device 52a, via the precharging resistor 82a, to the electrical power supply circuit 38a. Thereafter, the process transitions to step S15.

In step S15, the determination unit 90 determines whether or not the difference between the voltage V2 across both ends of the smoothing capacitor 44a and the output voltage VBAT1 of the electrical power storage device 52a is less than or equal to the predetermined difference threshold value. The voltage V2 across both ends of the smoothing capacitor 44a can be grasped based on the measurement result obtained by a non-illustrated voltage sensor that serves to measure the voltage at the cathode of the reverse flow prevention element 72a. In the case that the difference between the voltage V2 across both ends of the smoothing capacitor 44a and the output voltage VBAT1 of the electrical power storage device 52a is greater than the predetermined difference threshold value (NO in step S15), step S15 is repeated. In the case that the difference between the voltage V2 across both ends of the smoothing capacitor 44a and the output voltage VBAT1 of the electrical power storage device 52a is less than or equal to the predetermined difference threshold value (YES in step S15), the process transitions to step S16.

In step S16, the control unit 92, without passing via the precharging resistor 82a, connects the electrical power storage device 52a to the electrical power supply circuit 38a. Specifically, the control unit 92, by placing the switch SW8 that is provided in the disconnection device 78a in the ON state, and without passing via the precharging resistor 82a, serves to connect the electrical power storage device 52a to the electrical power supply circuit 38a. Thereafter, the switch SW9 that is provided in the disconnection device 78a is set to the OFF state. Thereafter, the process transitions to step S17.

In step S17, the control unit 92, using the DC electrical power that is supplied from the electrical power storage device 52b, starts the engine 32 that is connected to the electrical power generator 34 that is provided in the electrical power generating device 30. In this manner, the process shown in FIG. 6 comes to an end.

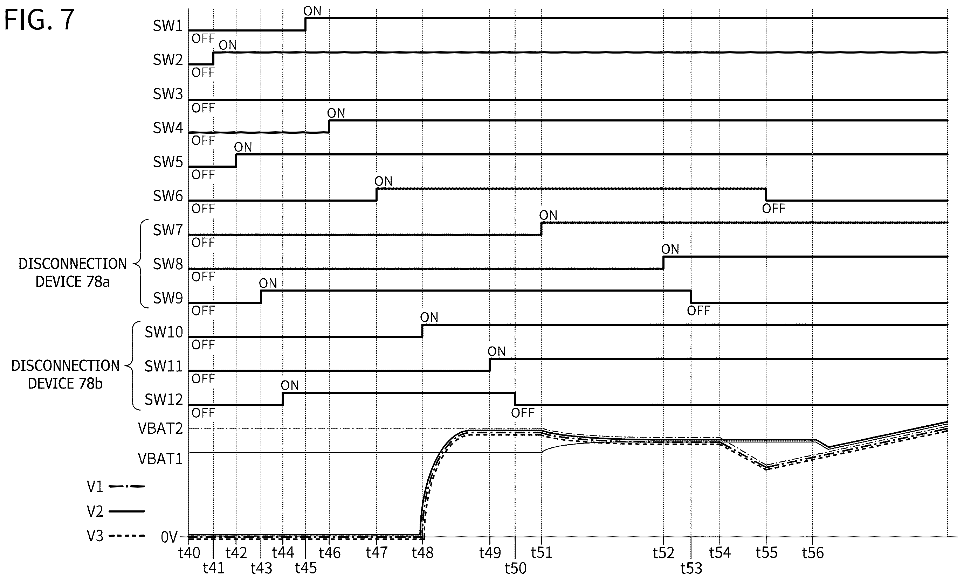

A description will be given with reference to FIG. 7 concerning the electrical power supply system according to a comparative example. FIG. 7 is a time chart showing an example of operations of the electrical power supply system according to the comparative example. In the comparative example, in the case that the output voltage VBAT1 of the electrical power storage device 52a is less than or equal to the output voltage VBAT2 of the electrical power storage device 52b, the smoothing capacitor 44 is subjected to precharging using the charge supplied from the electrical power storage device 52b.

At time t40, the switches SW1 to SW12 are set to the OFF state.

At times t41, t42, t43, t44, t45, and t46, the control unit 92, similar to the control at times t1, t2, t3, t4, t5, and t6 described above with reference to FIG. 4, sequentially sets the switches SW2, SW5, SW9, SW12, SW1, and SW4 to the ON state.

At time t47, the control unit 92 sets the switch (the reverse flow prevention element) SW6 that is provided in the reverse flow prevention device 70b to the ON state. In accordance therewith, a state in which a reverse flow of the electrical current is permitted in the electrical power supply circuit 38b is brought about.

At time t48, the control unit 92 sets the switch SW10 that is provided in the disconnection device 78b to the ON state. In accordance therewith, the DC electrical power that is output from the electrical power storage device 52b begins to be supplied, via the precharging resistor 82b, to the electrical power supply circuit 38b. As the precharging progresses, the difference between the voltages V1 to V3 across both ends of the smoothing capacitors 44 and the output voltage VBAT2 of the electrical power storage device 52b becomes less than or equal to the predetermined difference threshold value.

At time t49 after the difference between the voltages V1 to V3 across both ends of the smoothing capacitors 44 and the output voltage VBAT2 of the electrical power storage device 52b has become less than or equal to the predetermined difference threshold value, the control unit 92 sets the switch SW11 that is provided in the disconnection device 78b to the ON state. In accordance therewith, the electrical power storage device 52b, without passing via the precharging circuit 83b, is connected to the electrical power supply circuit 38b.

At time t50, the control unit 92 sets the switch SW12 that is provided in the disconnection device 78b to the OFF state.

At time t51, the control unit 92 sets the switch SW7 that is provided in the disconnection device 78a to the ON state. Since the output voltage VBAT2 of the electrical power storage device 52b is greater than the output voltage VBAT1 of the electrical power storage device 52a, the DC electrical power that is output from the electrical power storage device 52b begins to be supplied, via the precharging resistor 82a provided in the disconnection device 78a, to the electrical power storage device 52a. The supply of the electrical power from the electrical power storage device 52b to the electrical power storage device 52a continues until the difference between the output voltage VBAT1 of the electrical power storage device 52a and the output voltage VBAT2 of the electrical power storage device 52b becomes less than or equal to the predetermined difference threshold value. In the case that the difference between the output voltage VBAT1 of the electrical power storage device 52a and the output voltage VBAT2 of the electrical power storage device 52b is comparatively large, a comparatively long time period is required for the difference between the output voltage VBAT1 of the electrical power storage device 52a and the output voltage VBAT2 of the electrical power storage device 52b to become less than or equal to the predetermined difference threshold voltage. When the electrical current flows through the precharging resistor 82a for a comparatively long time period, the amount of heat generated from the precharging resistor 82a becomes comparatively large. For this reason, in the comparative example, it is necessary to use the precharging resistor 82a having a comparatively large rated electrical power. The precharging resistor 82a, which has a comparatively large rated electrical power, also has a large mass, and therefore, there is a concern in that the cruising distance of the moving object 10 may be reduced. Further, in the case that the switch SW8 has a welding malfunction, since the electrical power storage device 52a and the electrical power storage device 52b are connected together without passing via the precharging resistor 82, an inrush current flows from the electrical power storage device 52b to the electrical power storage device 52a.

At time t52 after the difference between the output voltage VBAT1 of the electrical power storage device 52a and the output voltage VBAT2 of the electrical power storage device 52b has become less than or equal to the predetermined difference threshold value, the control unit 92 sets the switch SW8 that is provided in the disconnection device 78a to the ON state. In accordance therewith, the electrical power storage device 52a, without passing via the precharging circuit 83a, is connected to the electrical power supply circuit 38a.

At time t53, the control unit 92 sets the switch SW9 that is provided in the disconnection device 78a to the OFF state.

At time t54, the control unit 92, using the DC electrical power that is supplied from the electrical power storage device 52b, starts the engine 32 that is connected to the electrical power generator 34 that is provided in the electrical power generating device 30.

After the electrical power generating device 30 has started supplying the electrical power, at time t55, the control unit 92 sets the switch (the reverse flow allowing element) SW6 that is provided in the reverse flow prevention device 70b to the OFF state. In accordance therewith, a state in which a reverse flow of the electrical current is not permitted in the electrical power supply circuit 38b is brought about.

At time t56, the control unit 92 places the load devices 42 in the ON state. In this manner, the electrical power supply system 26 is started.

In this manner, in the comparative example, a comparatively long time period may be required for the difference between the output voltage VBAT1 of the electrical power storage device 52a and the output voltage VBAT2 of the electrical power storage device 52b to become less than or equal to the predetermined difference threshold value. Since the electrical current is capable of flowing through the precharging resistor 82a for such a comparatively long time period, in the comparative example, the precharging resistor 82 having a comparatively large rated electrical power becomes necessary. Since the precharging resistor 82 having such a comparatively large rated electrical power has a large mass, the mass of the electrical power supply system 26 in the comparative example also becomes large. Such an increase in the mass of the electrical power supply system 26 reduces the driving range of the moving object 10.

In contrast thereto, according to the present embodiment, in the case that the output voltage VBAT1 of the electrical power storage device 52a is less than or equal to the output voltage VBAT2 of the electrical power storage device 52b, the reverse flow of the electrical current in the electrical power supply circuit 38a is permitted, and further, in a state in which the electrical power storage device 52b is disconnected from the electrical power supply circuit 38b, and using the electrical charge supplied from the electrical power storage device 52a, executes precharging of the smoothing capacitor 44. Thereafter, in a state in which the reverse flow of the electrical current in the electrical power supply circuit 38b is not permitted, the electrical power storage device 52b is connected, via the precharging resistor 82b, to the electrical power supply circuit 38b. According to the present embodiment, since the supply of the electrical power from the electrical power storage device 52b to the first electrical power storage device 52a over a prolonged time period does not take place, it is possible to use the precharging resistor 82 having a comparatively small rated electrical power. Therefore, according to the present embodiment, the weight of the precharging resistor 82 can be reduced. By reducing the weight of the precharging resistor 82, since the weight of the electrical power supply system 26 can be reduced, it is possible to contribute to an increase in the cruising distance of the moving object 10. In addition, since the supply of the electrical power from the electrical power storage device 52b to the electrical power storage device 52a over a prolonged time period does not take place, starting of the electrical power supply system 26 can occur more quickly.

In relation to the above-described disclosure, the following supplementary notes are further disclosed.

### Supplementary Note 1

The control device (84) according to the present disclosure is the control device provided in the electrical power supply system (26), wherein the electrical power supply system comprises the first electrical power supply circuit (38a) that is capable of supplying the direct current electrical power that is output from the electrical power generating device to the first load device (42a), the first electrical power storage device (52a) that is capable of being connected to the first electrical power supply circuit in parallel with the electrical power generating device, the second electrical power supply circuit (38b) that is capable of supplying the direct current electrical power that is output from the electrical power generating device to the second load device (42b), and the second electrical power storage device (52b) that is capable of being connected to the second electrical power supply circuit in parallel with the electrical power generating device, wherein the control device comprises; the comparison unit (89) that serves to compare the output voltage (VBAT1) of the first electrical power storage device with the output voltage of the second electrical power storage device (VBAT2); and the control unit (92) configured to start the electrical power supply system in a procedure according to a result of the comparison in the comparison unit, in the first case which is a case in which it is determined by the comparison unit that the output voltage of the first electrical power storage device is less than or equal to the output voltage of the second electrical power storage device, the control unit sets the first reverse flow prevention device (70a) that is provided in the first electrical power supply circuit to a state in which reverse flowing of the electrical current in the first electrical power supply circuit is allowed, and further, in a state in which the second electrical power storage device is disconnected from the second electrical power supply circuit, and using the electrical charge supplied from the first electrical power storage device, executes the precharging to charge the smoothing capacitor (44) that is provided in each of the first electrical power generating device, the first load device, and the second load device, and in the second case which is a case in which it is determined by the comparison unit that the output voltage of the first electrical power storage device is greater than the output voltage of the second electrical power storage device, the control unit sets the second reverse flow prevention device (70b) that is provided in the second electrical power supply circuit to a state in which reverse flowing of the electrical current in the second electrical power supply circuit is allowed, and further, in a state in which the first electrical power storage device is disconnected from the first electrical power supply circuit, and using the electrical charge supplied from the second electrical power storage device, executes the precharging.

In accordance with such a configuration, since the supply of the electrical power from the second electrical power storage device to the first electrical power storage device over a prolonged time period does not take place, it is possible to use a precharging resistor having a comparatively small rated electrical power. Therefore, since such a precharging resistor having a comparatively small rated electrical power is relatively lightweight, the weight of the electrical power supply system 26 can be reduced. Therefore, in accordance with such a configuration, it is possible to contribute to increasing the cruising distance of the moving object 10. In accordance with such a configuration, since the supply of the electrical power from the second electrical power storage device to the first electrical power storage device over a prolonged time period does not take place, starting of the electrical power supply system can occur more quickly.

### Supplementary Note 2

In the control device according to Supplementary Note 1, the control unit, in the first case, may execute the precharging by connecting the first electrical power storage device, via the first precharging resistor (82a), to the first electrical power supply circuit, and in the second case, may execute the precharging by connecting the second electrical power storage device, via the second precharging resistor (82b), to the second electrical power supply circuit.

### Supplementary Note 3

In the control device according to Supplementary Note 2, in the first case, the control unit, after having executed the precharging, in a state in which a reverse flow of the electrical current is not permitted in the second electrical power supply circuit, by connecting the second electrical power storage device, via the second precharging resistor, to the second electrical power supply circuit, may execute additional charging to further charge the smoothing capacitor that is provided in the second load device, and in the second case, after having executed the precharging, in a state in which a reverse flow of the electrical current is not permitted in the first electrical power supply circuit, by connecting the first electrical power storage device, via the first precharging resistor, to the first electrical power supply circuit, may execute additional charging to further charge the smoothing capacitor that is provided in the first load device.

### Supplementary Note 4

In the control device according to Supplementary Note 3, the control unit, in the first case, after the additional charging, may start the engine (32) that is connected to the electrical power generator (34) that is provided in the electrical power generating device using the electrical power that is supplied from the first electrical power storage device, and in the second case, after the additional charging, may start the engine that is connected to the electrical power generator that is provided in the electrical power generating device using the electrical power that is supplied from the second electrical power storage device.

### Supplementary Note 5

The moving object (10) according to the present disclosure is equipped with the control device according to any one of Supplementary Notes 1 to 4.

### Supplementary Note 6

Another aspect of the present disclosure is characterized by the control method that controls the electrical power supply system, wherein the electrical power supply system comprises the first electrical power supply circuit that is capable of supplying the direct current electrical power that is output from the electrical power generating device to the first load device, the first electrical power storage device that is capable of being connected to the first electrical power supply circuit in parallel with the electrical power generating device, the second electrical power supply circuit that is capable of supplying the direct current electrical power that is output from the electrical power generating device to the second load device, and the second electrical power storage device that is capable of connected to the second electrical power supply circuit in parallel with the electrical power generating device, the control method comprising the comparison step (S1) of comparing the output voltage of the first electrical power storage device with the output voltage of the second electrical power storage device, and the starting step (S2 to S17) of starting the electrical power supply system in a procedure according to the result of the comparison in the comparison step, wherein, in a first case which is a case in which it is determined in the comparison step that the output voltage of the first electrical power storage device is less than or equal to the output voltage of the second electrical power storage device, in the starting step, the first reverse flow prevention device that is provided in the first electrical power supply circuit is set to a state in which the reverse flowing of the electrical current in the first electrical power supply circuit is allowed, and further, in a state in which the second electrical power storage device is disconnected from the second electrical power supply circuit, and using the electrical charge supplied from the first electrical power storage device, the precharging that charges the smoothing capacitor that is provided in each of the first electrical power generating device, the first load device, and the second load device is executed, and in a second case which is a case in which it is determined in the comparison step that the output voltage of the first electrical power storage device is greater than the output voltage of the second electrical power storage device, in the starting step, the second reverse flow prevention device that is provided in the second electrical power supply circuit is set to a state in which reverse flowing of the electrical current in the second electrical power supply circuit is allowed, and further, in a state in which the first electrical power storage device is disconnected from the first electrical power supply circuit, and using the electrical charge supplied from the second electrical power storage device, the precharging is executed.

### Supplementary Note 7

In the control method according to Supplementary Note 6, in the first case, the precharging is executed by connecting the first electrical power storage device, via the first precharging resistor, to the first electrical power supply circuit, and in the second case, the precharging is executed by connecting the second electrical power storage device, via the second precharging resistor, to the second electrical power supply circuit.

### Supplementary Note 8

In the control method according to Supplementary Note 7, in the first case, after the precharging, in a state in which a reverse flow of the electrical current is not permitted in the second electrical power supply circuit, by connecting the second electrical power storage device, via the second precharging resistor, to the second electrical power supply circuit, additional charging may be executed to further charge the smoothing capacitor that is provided in the second load device, and in the second case, after the precharging, in a state in which a reverse flow of the electrical current is not permitted in the first electrical power supply circuit, by connecting the first electrical power storage device, via the first precharging resistor, to the first electrical power supply circuit, additional charging may be executed to further charge the smoothing capacitor that is provided in the first load device.

### Supplementary Note 9

In the control method according to Supplementary Note 8, in the first case, after the additional charging, the engine that is connected to the electrical power generator that is provided in the electrical power generating device may be started using the electrical power that is supplied from the first electrical power storage device, and in the second case, after the additional charging, the engine that is connected to the electrical power generator that is provided in the electrical power generating device may be started using the electrical power that is supplied from the second electrical power storage device.

### Supplementary Note 10

The program of the present disclosure is a program in order to execute the control method according to any one of Supplementary Notes 6 to 9.

### Supplementary Note 11

The storage medium of the present disclosure is a non-transitory storage medium in which the program according to Supplementary Note 10 is stored.

## Claims

1. A control device (84) provided in an electrical power supply system (26), wherein the electrical power supply system comprises:
a first electrical power supply circuit (38a) configured to be capable of supplying a direct current electrical power that is output from an electrical power generating device to a first load device (42a);
a first electrical power storage device (52a) configured to be capable of being connected to the first electrical power supply circuit in parallel with the electrical power generating device;
a second electrical power supply circuit (38b) configured to be capable of supplying a direct current electrical power that is output from the electrical power generating device to a second load device (42b); and
a second electrical power storage device (52b) configured to be capable of being connected to the second electrical power supply circuit in parallel with the electrical power generating device;
wherein the control device comprises:
a comparison unit (89) configured to compare an output voltage (VBAT1) of the first electrical power storage device with an output voltage of the second electrical power storage device (VBAT2); and
a control unit (92) configured to start the electrical power supply system in a procedure according to a result of the comparison in the comparison unit,
in a first case which is a case in which it is determined that the output voltage of the first electrical power storage device is less than or equal to the output voltage of the second electrical power storage device, the control unit sets a first reverse flow prevention device that is provided in the first electrical power supply circuit to a state in which reverse flowing of an electrical current in the first electrical power supply circuit is allowed, and further, in a state in which the second electrical power storage device is disconnected from the second electrical power supply circuit, and using the electrical charge supplied from the first electrical power storage device, the control unit executes precharging to charge a smoothing capacitor that is provided in each of the first electrical power generating device, the first load device, and the second load device; and
in a second case which is a case in which it is determined that the output voltage of the first electrical power storage device is greater than the output voltage of the second electrical power storage device, the control unit sets a second reverse flow prevention device that is provided in the second electrical power supply circuit to a state in which reverse flowing of the electrical current in the second electrical power supply circuit is allowed, and further, in a state in which the first electrical power storage device is disconnected from the first electrical power supply circuit, and using the electrical charge supplied from the second electrical power storage device, the control unit executes the precharging.

2. The control device according to claim 1, wherein
in the first case, the control unit executes the precharging by connecting the first electrical power storage device, via a first precharging resistor (82a), to the first electrical power supply circuit, and
in the second case, the control unit executes the precharging by connecting the second electrical power storage device, via a second precharging resistor (82b), to the second electrical power supply circuit.

3. The control device according to claim 2, wherein
in the first case, after having executed the precharging, in a state in which a reverse flow of the electrical current is not permitted in the second electrical power supply circuit, by connecting the second electrical power storage device, via the second precharging resistor, to the second electrical power supply circuit, the control unit executes additional charging to further charge the smoothing capacitor that is provided in the second load device, and
in the second case, after having executed the precharging, in a state in which a reverse flow of the electrical current is not permitted in the first electrical power supply circuit, by connecting the first electrical power storage device, via the first precharging resistor, to the first electrical power supply circuit, the control unit executes additional charging to further charge the smoothing capacitor that is provided in the first load device.

4. The control device according to claim 3, wherein
in the first case, after the additional charging, the control unit starts an engine (32) that is connected to an electrical power generator (34) that is provided in the electrical power generating device using an electrical power that is supplied from the first electrical power storage device, and
in the second case, after the additional charging, the control unit starts the engine that is connected to the electrical power generator that is provided in the electrical power generating device using an electrical power that is supplied from the second electrical power storage device.

5. A moving object comprising the electrical power supply system equipped with the control device according to any one of claims 1 to 4.

6. A control method that controls an electrical power supply system, wherein the electrical power supply system comprises:
a first electrical power supply circuit configured to be capable of supplying a direct current electrical power that is output from an electrical power generating device to a first load device;
a first electrical power storage device configured to be capable of being connected to the first electrical power supply circuit in parallel with the electrical power generating device;
a second electrical power supply circuit configured to be capable of supplying a direct current electrical power that is output from the electrical power generating device to a second load device; and
a second electrical power storage device configured to be capable of being connected to the second electrical power supply circuit in parallel with the electrical power generating device;
the control method comprising:
a comparison step (S1) of comparing an output voltage of the first electrical power storage device with an output voltage of the second electrical power storage device; and
a starting step (S2 to S17) of starting the electrical power supply system in a procedure according to a result of a comparison in comparing;
wherein in a first case which is a case in which it is determined in the comparison step that the output voltage of the first electrical power storage device is less than or equal to the output voltage of the second electrical power storage device, in the starting step, a first reverse flow prevention device that is provided in the first electrical power supply circuit is set to a state in which reverse flowing of an electrical current in the first electrical power supply circuit is allowed, and further, in a state in which the second electrical power storage device is disconnected from the second electrical power supply circuit, and using an electrical charge supplied from the first electrical power storage device, precharging to charge a smoothing capacitor that is provided in each of the first electrical power generating device, the first load device, and the second load device is executed; and
in a second case which is a case in which it is determined in the comparison step that the output voltage of the first electrical power storage device is greater than the output voltage of the second electrical power storage device, in the starting step, a second reverse flow prevention device that is provided in the second electrical power supply circuit is set to a state in which reverse flowing of an electrical current in the second electrical power supply circuit is allowed, and further, in a state in which the first electrical power storage device is disconnected from the first electrical power supply circuit, and using an electrical charge supplied from the second electrical power storage device, the precharging is executed.

7. The control method according to claim 6, wherein:
in the first case, the precharging is executed by connecting the first electrical power storage device, via a first precharging resistor, to the first electrical power supply circuit; and
in the second case, the precharging is executed by connecting the second electrical power storage device, via a second precharging resistor, to the second electrical power supply circuit.

8. The control method according to claim 7, wherein:
in the first case, after the precharging, in a state in which a reverse flow of an electrical current is not permitted in the second electrical power supply circuit, by connecting the second electrical power storage device, via the second precharging resistor, to the second electrical power supply circuit, additional charging is executed to further charge the smoothing capacitor that is provided in the second load device; and
in the second case, after the precharging, in a state in which a reverse flow of an electrical current is not permitted in the first electrical power supply circuit, by connecting the first electrical power storage device, via the first precharging resistor, to the first electrical power supply circuit, additional charging is executed to further charge the smoothing capacitor that is provided in the first load device.

9. The control method according to claim 8, wherein:
in the first case, after the additional charging, an engine that is connected to an electrical power generator that is provided in the electrical power generating device is started using an electrical power that is supplied from the first electrical power storage device; and
in the second case, after the additional charging, the engine that is connected to the electrical power generator that is provided in the electrical power generating device is started using an electrical power that is supplied from the second electrical power storage device.

10. A program in order to execute the control method according to any one of claims 6 to 9

11. A non-transitory storage medium in which the program according to claim 10 is stored.
